(19) **Europäisches Patentamt** / **European Patent Office** / **Office européen des brevets**

(11) **EP 3 889 845 B1**

(12) **EUROPEAN PATENT SPECIFICATION**

(45) Date of publication and mention
of the grant of the patent:
**09.10.2024 Bulletin 2024/41**

(21) Application number: **21162756.7**

(22) Date of filing: **16.03.2021**

(51) International Patent Classification (IPC):
**G06N 3/045** *(2023.01)* **G06N 3/08** *(2023.01)*
**G06N 3/063** *(2023.01)*

(52) Cooperative Patent Classification (CPC):
**G06N 3/063; G06N 3/045; G06N 3/08**

(54) **INFORMATION PROCESS DEVICE, DATA DECOMPOSITION METHOD, AND DATA DECOMPOSITION PROGRAM**

VORRICHTUNG ZUR INFORMATIONSVERARBEITUNG, VERFAHREN ZUR DATENDEKOMPOSITION UND PROGRAMM ZUR DATENDEKOMPOSITION

DISPOSITIF DE TRAITEMENT D'INFORMATIONS, PROCÉDÉ DE DÉCOMPOSITION DE DONNÉES ET PROGRAMME DE DÉCOMPOSITION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2020 JP 2020047103**

(43) Date of publication of application:
**06.10.2021 Bulletin 2021/40**

(73) Proprietor: **DENSO CORPORATION**
**Aichi-pref., 448-8661 (JP)**

(72) Inventors:
• **KADOWAKI, Tadashi**
**Kariya-city, Aichi-pref., 448-8661 (JP)**

• **AMBAI, Mitsuru**
**Tokyo, 150-0002 (JP)**

(74) Representative: **Winter, Brandl - Partnerschaft mbB**
**Alois-Steinecker-Straße 22**
**85354 Freising (DE)**

(56) References cited:
**DE-T5- 112017 002 766    US-A1- 2019 286 982**

• **BENJAMIN ERICHSON N ET AL: "Randomized Nonnegative Matrix Factorization", ARXIV.ORG, CORNELL UNIVERSITY LIBRARY, 201 OLIN LIBRARY CORNELL UNIVERSITY ITHACA, NY 14853, 6 November 2017 (2017-11-06), pages 1 - 24, XP081285628**

**EP 3 889 845 B1**

## Description

The present disclosure relates to an information process device, a data decomposition method, a data decomposition program.

For example, machine learning using a neural network has been widely performed. Here, between an input layer of the neural network and an output layer or an intermediate layer, for example, a weight (weight matrix) represented by a matrix is defined. In the neural network, when the number of layers increases, information process accuracy increases. However, calculation using the weight matrix is performed in accordance with the number of layers, and a memory capacity necessary for the calculation process using record of the weight matrix and the weight matrix increases.

WO 2018 / 016 608 A1 discloses that an approximate matrix represented by the product of a basis matrix, which is an integer matrix, and a coefficient matrix, which is a real matrix, constitutes a weight matrix of at least one layer in a neural network model. Thereby, the weight matrix is approximated by the product of the basis matrix having a small number of data and the coefficient matrix. The approximate matrix, which is the product, in other words, is a data-compressed weight matrix. By using this approximate matrix instead of the weight matrix, the necessary memory is small and a processing time is also shortened in calculation of a connected layer in the neural network model.

Here, in WO 2018 / 016 608 A1, a cost function representing decomposition error is solved for decomposing the weight matrix into the product of the coefficient matrix, which is the real matrix, and the basis matrix, which is the integer matrix. By fixing elements of the basis matrix and optimizing elements of the coefficient matrix with use of the least squares method, the elements of the coefficient matrix are updated so as to minimize the cost function. Further, by fixing the elements of the coefficient matrix, the elements of the basis matrix are updated so as to minimize the cost function. These are repeated until they converge.

However, the method described in WO 2018 / 016 608 A1 fixes one of the basis matrix and the coefficient matrix and changes the other. Therefore, even when the fixed one is not appropriate and the other is changed, it is difficult to decompose the weight matrix into the product of the basis matrix having the appropriate degree and the coefficient matrix. That is, it is difficult to obtain the approximate matrix having the higher approximate degree with respect to the weight matrix.

A randomized hierarchical alternating least squares (HALS) algorithm to compute the nonnegative matrix factorization (NMF) is presented by Erichson NB et al: "Randomized Nonnegative Matrix Factorization", ARXIV.ORG, Cornell University Library, 201 Olin Library Cornell University Ithaca, NY 14853, November 6, 2017, (2017-11-06), pages 1-24. By deriving a smaller matrix from the nonnegative input data, a more efficient nonnegative decomposition is to be computed. The algorithm by Erichson NB et al scales to big data applications while attaining a near-optimal factorization. The proposed algorithm is evaluated using synthetic and real world data and shows substantial speedups compared to deterministic HALS.

A feature point estimation device, a feature point estimation system, a feature point estimation method and a feature point estimation program are disclosed by DE 11 2017 002 766 T5.

Document BENJAMIN ERICHSON N ET AL, "Randomized Nonnegative Matrix Factorization", ARXIV.ORG, CORNELL UNIVERSITY LIBRARY, 201 OLIN LIBRARY CORNELL UNIVERSITY ITHACA, NY 14853, (20171106), pages 1 - 24, relates to randomized nonnegative matrix factorization and neither discloses the generation of the regression model shown by the third equation in claim 1 of the present invention nor the feature in claim 1 of the present invention that the generation of the regression model at each iteration of the repeating process is based on the previous determined basis data candidates and their corresponding evaluation metrics.

Furthermore, the feature point estimation device of DE 11 2017 002 766 T5 estimates a feature point in an image while reducing the use of storage.

It is an object of the present disclosure to provide an information process device, a data decomposition method, and a data decomposition program that are capable of calculating an approximate data that is the product of basis data having the higher approximate degree and coefficient data based on predetermined data.

The object is solved by an information process device according to claim 1, a computer-implemented data decomposition method according to claim 5, and a data decomposition program according to claim 6. Advantageous further developments are subject of the dependent claims.

According to the present disclosure, it may be possible to obtain the approximate data that has the higher approximate degree with respect to predetermined data and is the product of the basis data and the coefficient data.

The above and other features and advantages of the present disclosure will be more clearly understood from the following detailed description with reference to the accompanying drawings. In the accompanying drawings,

FIG. 1 is a schematic configuration of an information process device according to the present embodiment;
FIG. 2 is a conceptual diagram showing a process of decomposing a weight matrix into a basis matrix and a coefficient matrix according to the present embodiment;
FIG. 3 is a schematic diagram showing a combination of basis matrix candidates according to the present embodiment;

FIG. 4 is a schematic diagram showing a probability distribution of weight parameters according to the present embodiment;

FIG. 5 is a flowchart showing a weight matrix decomposition process according to the present embodiment; and

FIG. 6 is a diagram showing an experimental result by a weight matrix decomposition process according to the present embodiment.

Non-patent literatures of "Designing metamaterials with quantum annealing and factorization machines" and "Bayesian Optimization of Combinatorial Structures" are incorporated herein by reference.

Hereinafter, an embodiment of the present disclosure will be described with reference to the drawings. The embodiment described below shows an example in the case of practicing the present disclosure.

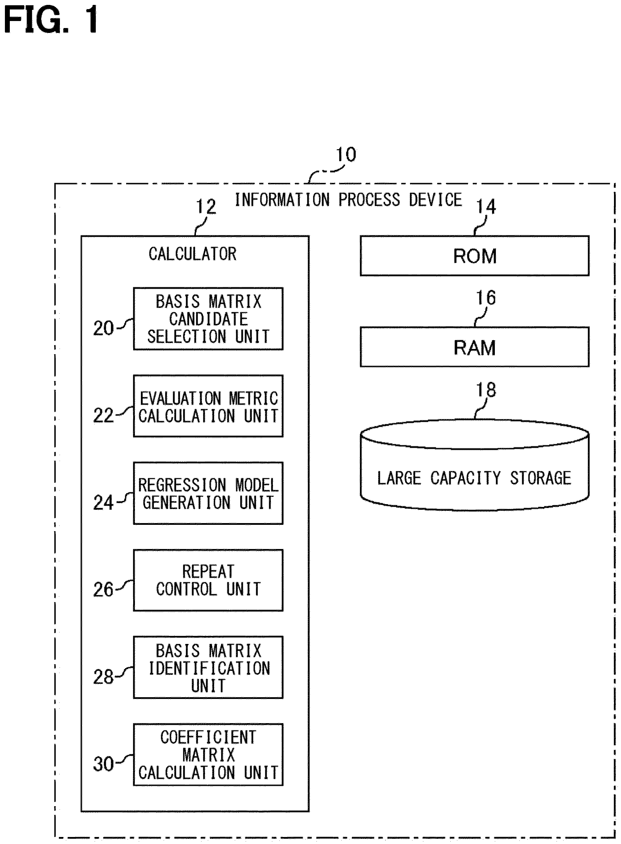

FIG. 1 is a block diagram showing an electrical configuration of an information process device 10 according to the present embodiment. The information process device 10 according to the present embodiment includes a calculator 12 including a quantum computer or the like, a ROM (Read Only Memory) 14 that stores various programs, various data, and the like in advance, a RAM (Random Access Memory) 16 used as a work area when the calculator 12 executes the various programs, and a large capacity storage 18 that stores various programs, various data, and the like.

The quantum computer is a computer that uses substances such as electrons or photons used by the principles of quantum mechanics, forms an information basic unit (referred to as a qubit), and performs calculations using these qubits. The calculator 12 is not limited to the quantum computer, and may be an arbitrary computer that performs calculations by classical bits (for example, CMOS transistor). The information process device 10 may include the quantum computer and the arbitrary computer described above. That is, all or a part of the calculator 12 of the information process device 10 may be the quantum computer.

The large capacity storage 18 stores the weight matrix used for the neural network, the program for executing a weight matrix decomposition process described later, or the like. The large capacity storage 18 is, for example, a HDD (Hard Disk Drive) or a semiconductor storage. However, the large capacity storage 18 is not limited to these.

Further, the information process device 10 includes a keyboard, a computer mouse, or the like, and includes an operation input unit that receives input of various operations, an image display unit that displays various images and is, for example, a liquid crystal display device or the like, and an external interface that is connected to a different information process device or the like via a communication line and transmits various data to and receives various data from the different information process device or the like.

The information process device 10 according to the present embodiment approximates model data including various values to approximate data including the combination of the basis data and coefficient data. In the present embodiment, in one example, the basis data is an integer, and the coefficient data is a real number. Here, in one example, the combination is the product of the basis data and the coefficient data. In the present embodiment, in one example, the model data is weight data showing the weight for each of layers of the neural network including multiple layers.

The neural network according to the present embodiment is used for automatic driving of a vehicle such as an automobile. Data input to the neural network is an image data acquired by imaging with an in-vehicle camera, and the output is data (operation amount of accelerator or brake, operation amount of steering wheel, or the like) necessary for the automatic driving of the vehicle.

The weight data is set to data (hereinafter, referred to as "weight matrix W") that can be represented by a matrix. Accordingly, the basis data is set to a basis matrix M, a coefficient data is set to a coefficient matrix C, and the approximate data is set to an approximate matrix V. However, the model data does not necessarily have to be the data represented by the matrix. Accordingly, the basis data, the coefficient data, and the approximate data do not have to be data represented by the matrix. In other words, the model data is not limited as long as the model data can be represented by the approximate data which is the combination of the basis data and the coefficient data.

In the present embodiment, the information process device 10 has a function of executing the weight matrix decomposition process of decomposing the weight matrix W into the basis matrix M and the coefficient matrix C in order to approximate the weight matrix W by the approximate matrix V including the basis matrix M and the coefficient matrix C.

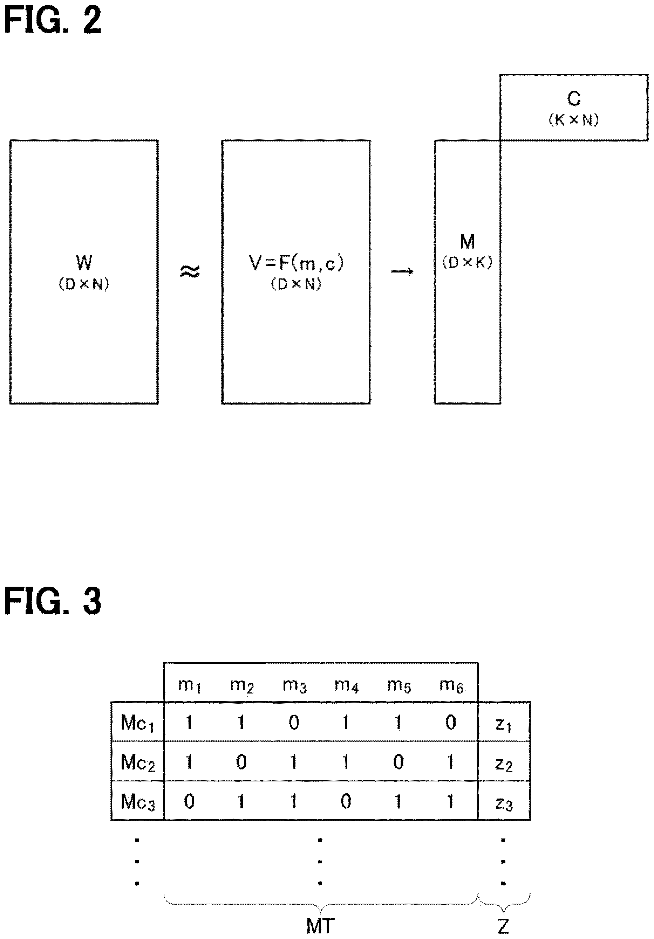

FIG. 2 is a conceptual diagram showing a process (integer basis decomposition method) of decomposing the weight matrix W of D rows and N columns into the basis matrix M and the coefficient matrix C. This process corresponds to data compression of compressing the weight matrix W into the basis matrix M and the coefficient matrix C. In the present embodiment, the basis matrix M is an integer matrix, and the coefficient matrix C is a real matrix.

The weight matrix W can be approximated by a function of an approximate matrix $V = F(m,c)$ expressed by an equation (1) described later in which the integer data is defined as "m" and the real number is defined as "c". The function $F(m,c)$ consists of $D \times N$ functions represented by $f_{dn}$. The d runs from 1 to D. The n runs from 1 to N. The approximate matrix V represented by the equation (1) is represented by a matrix product MC of the basis matrix M and the coefficient matrix C as represented by an equation (2).

$$W \approx V = F(m, c) \quad \cdot \cdot \cdot \quad (1)$$

$$V = MC \quad \cdot \cdot \cdot \quad (2)$$

When the weight matrix W is represented by D rows and N columns, the basis matrix M is represented by D rows and K columns (K is an integer smaller than N) and the coefficient matrix C is represented by K rows and N columns. In one example, the weight matrix W is represented by an equation (3) described later, and the basis matrix M is represented by an equation (4) described later, and the coefficient matrix C is represented by an equation (5) described later. A component constituting the weight matrix W is set to weight data w.

$$W = \begin{pmatrix} w_1 & w_2 & w_3 & w_4 \\ w_5 & w_6 & w_7 & w_8 \\ w_9 & w_{10} & w_{11} & w_{12} \end{pmatrix} \quad \cdot \cdot \cdot \quad (3)$$

$$M = \begin{pmatrix} m_1 & m_2 \\ m_3 & m_4 \\ m_5 & m_6 \end{pmatrix} \quad \cdot \cdot \cdot \quad (4)$$

$$C = \begin{pmatrix} c_1 & c_2 & c_3 & c_4 \\ c_5 & c_6 & c_7 & c_8 \end{pmatrix} \quad \cdot \cdot \cdot \quad (5)$$

In the present embodiment, in one example, a component $m_n$ of the basis matrix M is a binary value of "0" or "1". However, the component $m_n$ is not limited to this, and may be a ternary value of "-1", "0", or "1" or a multi-valued value more than ternary value. The component $m_n$ of the basis matrix M can be binary or multi-valued. A matrix in which each component in the m-th row and n-th column is the matrix component $m_n$ is the basis matrix M. In such a manner, the basis matrix M consists of multiple binary values or multi-valued values. The example of the binary value is not limited to "0" or "1". For example, a different value such as "-1" or "1" may be applied.

The coefficient matrix C is expressed by an equation (6) described later. The approximate matrix V is expressed by an equation (7) described later by substituting the equation (6) into the equation (1). A function G consists of L functions represented by $g_l$.

$$C = G(m, w) \quad \cdot \cdot \cdot \quad (6)$$

$$V = F(m, G(m, w)) \quad \cdot \cdot \cdot \quad (7)$$

As shown in the equations (1) and (2), in a case of V = F (m,c) = MC, the equations (6) and (7) are respectively represented by equations (8) and (9) described later. The "T" in the equations (8) and (9) indicates a transposed matrix, and the "-1" indicates an inverse matrix.

$$C = (M^T M)^{-1} M^T W \quad \cdot \cdot \cdot \quad (8)$$

$$V = M(M^T M)^{-1} M^T W \quad \cdot \cdot \cdot \quad (9)$$

As shown in the equation (9), the approximate matrix V that approximates the weight matrix W can be represented by the basis matrix M and the weight matrix W. The approximation degree of the weight matrix W by the approximate matrix V is represented by an equation (10) described later with use of the least squares method. That is, by calculating the basis matrix M for minimizing an error z, it is possible to obtain the approximate matrix V that approximates the weight matrix W.

$$z = |W - V|^2 = |W - M(M^T M)^{-1} M^T W|^2 \quad \cdots \quad (1 0)$$

However, based on the equation (10), it is difficult to directly obtain the optimum basis matrix M that minimizes the error z. Therefore, in the present embodiment, in the weight matrix decomposition process, the information process device 10 calculates the optimum basis matrix M by using a black box optimization, and thereby obtains the approximate matrix V.

As an outline of the weight matrix decomposition process according to the present embodiment, first, the information process device 10 selects the basis matrix candidate Mc that may be a candidate constituting the approximate matrix V, calculates an approximate matrix candidate Vc based on the basis matrix candidate Mc, and calculates an evaluation metric that evaluates the approximate matrix candidate Vc. As expressed by the equation (10), the evaluation metric is the error z between the approximate matrix candidate Vc and the weight matrix W.

Further, the information process device 10 repeats processes of generating a regression model based on a relationship between the basis matrix candidate Mc and the evaluation metric, further selecting the appropriate basis matrix candidate Mc for improving a prediction accuracy of this regression model, calculating the evaluation metric for the approximate matrix candidate Vc calculated from the selected basis matrix candidate Mc. Through the processes, the regression model is improved. The information process device 10 uses the basis matrix candidate Mc used for obtaining the approximate matrix candidate Vc that approximates the weight matrix W based on the final regression model, and calculates the coefficient matrix C from $C = (M^T M)^{-1} M^T W$ shown in the equation (8).

That is, the repetition of the processes described above aims to improve the prediction accuracy of the regression model. After the prediction accuracy of the regression model becomes sufficiently high, the basis matrix candidate Mc is determined based on the regression model.

Next, the calculator 12 that executes the weight matrix decomposition process will be described in detail with reference to FIG. 1. In the present embodiment, the calculator 12 of the information process device 10 includes a basis matrix candidate selection unit 20, an evaluation metric calculation unit 22, a regression model generation unit 24, a repeat control unit 26, a basis matrix identification unit 28, and a coefficient matrix calculation unit 30.

The basis matrix candidate selection unit 20 selects the basis matrix candidate Mc which is a candidate that can form the approximate matrix V. Each of the components of the basis matrix candidate Mc is the binary value of "1" or "0". Therefore, when the basis matrix candidate Mc is expressed by the equation (4), for example, the $m_1$ is equal to 1 ($m_1$=1), the $m_2$ is equal to 1 ($m_2$=1), the ms is equal to 0 ($m_3$=0), the $m_4$ is equal to 1 ($m_4$=1), the ms is equal to 1 (ms=1), the ms is equal to 0 (ms=0). At the beginning of the repeat process, the basis matrix candidate selection unit 20 may randomly select the basis matrix candidate Mc. After the first repeat process, that is, in the second repeat process or more, the basis matrix candidate selection unit 20 selects the basis matrix candidate Mc based on a minimization function. The selection after the first repeat process will be described later.

The evaluation metric calculation unit 22 calculates the approximate matrix candidate Vc by using the basis matrix candidate Mc, and calculates the evaluation metric evaluating the approximate matrix candidate Vc. As described above, the evaluation metric of the present embodiment is the error z between the approximate matrix candidate Vc formed by the basis matrix candidate Mc and the weight matrix W, and is calculated by using the equation (10) in one example.

The regression model generation unit 24 generates the regression model showing the relationship between the evaluation metric (error z) and the basis matrix candidate Mc constituting the approximate matrix candidate Vc. Here, at the stage where the basis matrix candidate Mc is selected once, the number of data showing the relationship between the basis matrix candidate Mc (approximate matrix candidate Vc) and the evaluation metric is one. However, by repeating the selection of the basis matrix candidate Mc and the calculation of the evaluation metric, the data showing the relationship between the basis matrix candidate Mc and thee evaluation metric is accumulated for the number of repetitions. The regression model generation unit 24 generates the regression model showing the relationship between the basis matrix candidate Mc and the evaluation metric by using the data accumulated as described above. Hence, the data is accumulated, and thereby the prediction accuracy of the evaluation metric predicted by the regression model is improved.

Specifically, the regression model generation unit 24 generates a regression model shown by the following equation (11) in which the components $m_n$ constituting the basis matrix candidate Mc are set to selection identifiers $s_i$ and $s_j$. That is, the selection identifiers of $s_i$ and $s_j$ the present embodiment indicate "1" or "0" that is the value of the components $m_i$ and $m_j$. Further, the $a_{ij}$ and $b_i$ indicate weight parameters.

$$z = \sum_{i,j} a_{ij} s_i s_j + \sum_{i} b_i s_i \quad \cdot \cdot \cdot \quad (11)$$

According to the present configuration, the regression model predicting the error z, which is the evaluation metric, is represented by the sum of the products of the components $m_i$ and $m_j$ constituting the basis matrix candidate Mc and a weight parameter $a_{ij}$ and the sum of the products of the component $m_i$ and a weight parameter $b_i$. The regression model expressed by the equation (11) is a model equation used for minimizing the error z, and, hereinafter, is also referred to as a minimization function.

The regression model represented by the equation (11) of the present embodiment includes quadratic terms. However, the regression model may include the third-order or higher-order term. In other words, the regression model may be a cubic polynomial. According to this, it may be possible to generate the more optimum approximate matrix V than that of the regression model represented by the quadratic term. By using an auxiliary variable as the third-order or higher-order term in the regression model may be represented by a quadratic polynomial.

The repeat control unit 26 executes processes by the coefficient matrix calculation unit 30, the evaluation metric calculation unit 22, and the regression model generation unit 24 at least once by using the selected basis matrix candidate Mc. More specifically, the repeat control unit 26 causes the basis matrix candidate selection unit 20 to select the basis matrix candidate Mc so that the regression model generated by the regression model generation unit 24 more accurately predicts the evaluation metric, in other words, so as to improve the prediction accuracy of the evaluation metric by the regression model. The repeat control unit 26 repeats processes by the coefficient matrix calculation unit 30, the evaluation metric calculation unit 22, and the regression model generation unit 24 by using the selected basis matrix candidate Mc until a predetermined termination condition is satisfied.

When the predetermined termination condition is satisfied, the basis matrix identification unit 28 identifies the basis matrix candidate Mc constituting the approximate matrix candidate Vc whose evaluation metric has a desirable value. The basis matrix candidate Mc identified by the basis matrix identification unit 28 is set to the basis matrix M constituting the approximate matrix V to be obtained. The evaluation metric of the desirable value is, for example, an evaluation metric of a predetermined value or less or the best evaluation metric.

When the predetermined termination condition is satisfied, the coefficient matrix calculation unit 30 calculates the coefficient matrix C by using the basis matrix candidate Mc identified by the basis matrix identification unit 28. The coefficient matrix C calculated by the coefficient matrix calculation unit 30 is the coefficient matrix C constituting the approximate matrix V to be obtained.

FIG. 3 is a schematic diagram showing how the data of the basis matrix candidates MT (basis matrix candidates $Mc_1$ to $Mc_n$) and the errors z (errors $z_1$ to $z_n$) are accumulated by the repeat process. The first basis matrix candidate $Mc_1$ is {1, 1, 0, 1, 1, 0}, as described above. The error z (evaluation metric) obtained by comparing the approximate matrix candidate Vc constituted by the basis matrix candidate $Mc_1$ with the weight matrix W is $z_1$. The regression model is generated based on this result. Based on the regression model, the basis matrix candidate selection unit 20 determines the second basis matrix candidate $Mc_2$ as {1, 0, 1, 1, 0, 1}, and the error of the approximate matrix candidate $Vc_2$ constituted by this basis matrix candidate $Mc_2$ is $z_2$. In the third process, the regression model is generated based on the first basis matrix candidate $Mc_1$ and the first error $z_1$ and the second basis matrix candidate $Mc_2$ and the second error $z_2$. The prediction accuracy of the regression model obtained as described above becomes higher than that of the previous regression model as the number of used data increases. Next, the basis matrix candidate selection unit 20 obtains the third basis matrix candidate $Mc_3$ based on the regression model, and repeats the same processes.

In such a manner, the selection of the basis matrix candidate $Mc_n$ and the calculation of the error $z_n$ are repeated, thereby the data for generating the regression model increases, and an accurate regression model is generated as a model equation showing a regression between the basis matrix candidate MT and the error z.

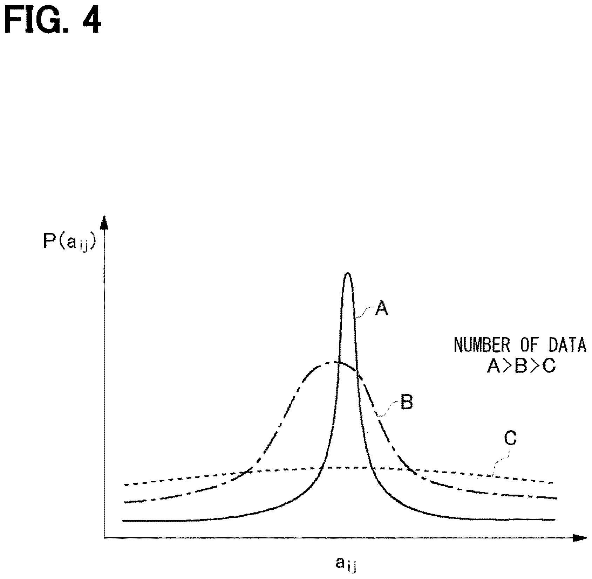

Next, the point that prediction accuracy of the regression model becomes higher will be described. The regression model generation unit 24 obtains the weight parameters $a_{ij}$ and $b_i$ of the regression model, which is the minimization function, as probability distributions $P(a_{ij})$ and $P(b_i)$, as shown in FIG. 4. FIG. 4 is a diagram showing the probability distribution $P(a_{ij})$ of the weight parameter $a_{ij}$, the similar applies to the probability distribution $P(bi)$ of the weight parameter $b_i$. When the number of data of the basis matrix candidate $Mc_n$ and the error $z_n$ in accordance with the basis matrix candidate $Mc_n$ is small, the probability distributions $P(a_{ij})$ and $P(b_i)$ of the weight parameters $a_{ij}$ and $b_i$ are broad distributions. However, as the selection of the basis matrix candidate Mc and the calculation of the error z are repeated and the number of data increases (see FIG. 3), the probability distributions $P(a_{ij})$ and the $P(b_i)$ of the weight parameters $a_{ij}$ and $b_i$ become sharp. That is, the prediction accuracy of the regression model becomes higher.

When selecting the basis matrix candidate Mc, the basis matrix candidate selection unit 20 uses the representative values of the weight parameters $a_{ij}$ and $b_i$ shown by the probability distributions $P(a_{ij})$ and $P(bi)$ and obtains the basis matrix candidate Mc that minimizes the minimization function. In one example, the representative values applied as the weight parameters $a_{ij}$ and $b_i$ of the minimization function are set to values sampled in accordance with the probability distributions $P(a_{ij})$ and $P(bi)$.

Further, although the basis matrix candidate Mc is selected by the minimization function for improving the prediction accuracy of the regression model, means other than minimization by the minimization function may be used as long as it is selection means for improving the prediction accuracy of the regression model. In one example not part of the present invention, it is possible to select random combinations, and, however, this selection is inefficient.

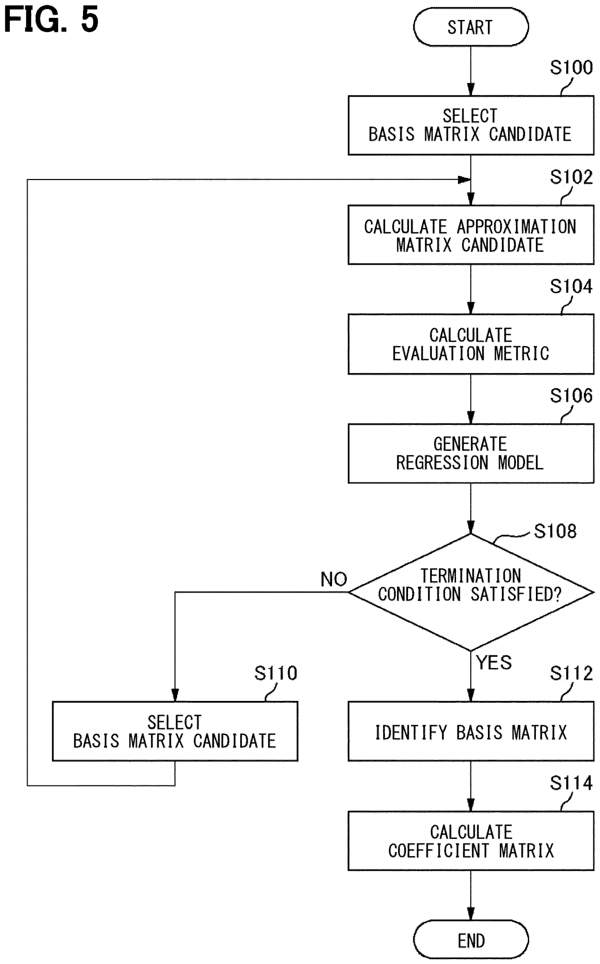

Next, the weight matrix decomposition process will be described with reference to FIG. 5. FIG. 5 is a flowchart showing a flow of the weight matrix decomposition process executed by the information process device 10. The weight matrix decomposition process is executed by a program stored in a storage medium such as the large capacity storage 18 in the information process device 10. Further, by executing this program, a method corresponding to the program is performed.

First, in S100, the basis matrix candidate selection unit 20 selects the basis matrix candidate Mc. In one example, the component $m_n$ of the basis matrix candidate Mc selected first is randomly selected.

In the next S102, the evaluation metric calculation unit 22 calculates the approximate matrix candidate Vc based on the equation (9) with use of the basis matrix candidate Mc and the weight matrix W.

Next, in S104, the evaluation metric calculation unit 22 calculates the error z that is the evaluation metric of the approximate matrix candidate Vc based on the equation (10).

In the next S106, the regression model generation unit 24 generates the minimization function that is the regression model shown in the equation (11) described above based on the basis matrix candidate $Mc_n$ (n = 1, ... , i; i is the number of repetitions) and the evaluation metric (error $z_n$).

In the next S108, the repeat control unit 26 determines whether the termination condition is satisfied. When the determination is positive, the process shifts to S112. When the determination is negative, the process shifts to S110. The termination condition includes, for example, a case where the number of selections of the basis matrix candidate Mc reaches the predetermined number or a case where the evaluation metric (error $z_n$) is less than a predetermined reference.

In S110, the basis matrix candidate selection unit 20 selects the basis matrix candidate Mc that improves the prediction accuracy of the regression model (basis matrix candidate Mc that causes deviation between the prediction value of the error z and the measured value to be small, and particularly, deviation around the minimum value to be smaller in the present embodiment). In the embodiment of the present invention, the basis matrix candidate selection unit 20 determines the basis matrix candidate Mc to be selected next in accordance with the following expression (12).

$$\operatorname*{argmin}_{s \in \{0,1\}^N} \sum_{i,j} a_{ij} s_i s_j + \sum_i b_i s_i \quad \cdot \cdot \cdot \quad (1\,2)$$

The expression (12) is an expression that calculates the minim error z by setting each of the components $m_n$ constituting the basis matrix candidate Mc to "1" or "0", based on the regression model.

Here, when the number of repetitions is small, the prediction accuracy of the regression model is low, and the number of selected basis matrix candidate Mc is different from that in the case where the basis matrix candidate Mc is randomly selected and is small. On the other hand, when the number of repetitions is large, the prediction accuracy of the regression model is high, and the difference between the selected basis matrix candidate Mc and the basis matrix M finally desired to be obtained is small. With this characteristic, it may be possible to efficiently obtain the regression model that can widely cover the selectable basis matrix candidate Mc and high accurately predict the periphery of the desired basis matrix candidate Mc. However, it is not limited to this method, and other method may be used as long as the regression model with high prediction accuracy is efficiently obtained.

The weight matrix decomposition process selects the new basis matrix candidate Mc, and calculates the approximate matrix candidate Vc described above based on the basis matrix candidate Mc (S102), calculates the error z based on the approximate matrix candidate Vc (S104), and generates the regression model (S106). Until the termination condition is satisfied, the weight matrix decomposition process repeats these processes.

On the other hand, when the termination condition is satisfied in the determination in S108, the basis matrix identification unit 28 identifies the basis matrix candidate Mc, which minimizes the error z when the termination condition is satisfied, as the basis matrix M constituting the approximate matrix V in S112.

Next, in S114, the coefficient matrix calculation unit 30 calculates the coefficient matrix C by using the identified basis matrix M, and the weight matrix decomposition process ends. The basis matrix M, the coefficient matrix C, and the approximate matrix V, which are calculated by the weight matrix decomposition process, are stored in the large capacity storage 18.

As described above, the weight matrix decomposition process calculates the optimum basis matrix M that minimizes the error z between the approximate matrix V and the weight matrix W by the black box optimization, and uniquely calculates the coefficient matrix C based on this basis matrix M. Thereby, the weight matrix decomposition process can obtain the approximate matrix V that has the high approximation with respect to the weight matrix W and is the product of the basis matrix M and the coefficient matrix C.

The approximate matrix V (product of the basis matrix M and the coefficient matrix C) calculated by the weight matrix decomposition process is set to, for example, the approximate matrix V of the weight matrix W that is the weight data used for the neural network for the automatic driving of the vehicle, stored in a storage medium of the vehicle, and is used for calculation. That is, for performing the automatic driving of the vehicle, when the weight matrix W is used as it is, a large capacity memory for storing the weight matrix W is necessary. However, by using the approximate matrix V, it may be possible to make the memory capacity required for the automatic driving smaller.

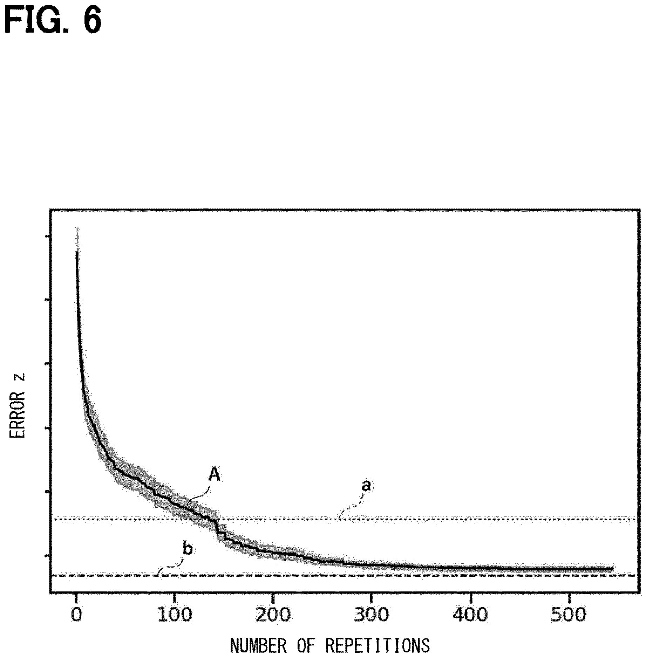

FIG. 6 is a diagram showing an experimental result by the weight matrix decomposition process. A vertical axis of FIG. 6 is an error z between the model data (weight matrix W) and the approximate matrix V, and a horizontal axis is the number of repetitions. In FIG. 6, a broken line a shown with the experimental result A is the error z that can be reached by a conventional approximation solution method, and a broken line b is the error z corresponding to the optimal solution of the approximate matrix V. As shown in FIG. 6, it was experimentally confirmed that, in the weight matrix decomposition process, it is possible to calculate the approximate matrix V that is closer to the optimal solution as the number of repetitions increases, and it is possible to calculate the approximate matrix V that provides the error z that cannot be reached by the conventional approximation solution method.

Various changes or improvements can be made to the embodiment described above.

For example, in the embodiment described above, the embodiment in which the "argmin" shown in the expression (12) is applied as the search condition has been described. This is because, for selecting the more appropriate basis matrix candidate Mc, the error z between the approximate matrix candidate Vc and the weight matrix W is set to the evaluation metric. Depending on how the evaluation metric is set, the basis matrix candidate Mc may be selected so as to maximize the evaluation metric.

In the above, the embodiment in which the approximate matrix V including the combination of the basis matrix M and the coefficient matrix C is represented by the product of the basis matrix M and the coefficient matrix C as shown in the equation (2) has been described. The approximate matrix V has to include the combination of the basis matrix M and the coefficient matrix C. For example, a result obtained by multiplying the product of the basis matrix M and the coefficient matrix C by a predetermined coefficient, or adding a predetermined constant to the product of the basis matrix M and the coefficient matrix C may be used as the approximate matrix V.

In the above, one embodiment in which the error z between the weight matrix W and the approximate matrix V is calculated with use of the least squares method as shown in the equation (10) has been described. For example, the error between the weight matrix W and the approximate matrix V may be set to an absolute value of a difference between the weight matrix W and the approximate matrix V.

In the above, one embodiment in which the regression model using the probability distributions as the weight parameters $a_{ij}$ and $b_i$ of the equation (11) is applied has been described. For example, as the regression model, a different method (algorithm) such as Factorization Machine may be applied.

[Industrial applicability]

The present disclosure can be used for calculating the approximate data that approximates (is close to) the predetermined model data.

The controllers and methods described in the present disclosure may be implemented by a special purpose computer created by configuring a memory and a processor programmed to execute one or more particular functions embodied in computer programs. Alternatively, the controllers and methods described in the present disclosure may be implemented by a special purpose computer created by configuring a processor provided by one or more special purpose hardware logic circuits. Alternatively, the controllers and methods described in the present disclosure may be implemented by one or more special purpose computers created by configuring a combination of a memory and a processor programmed to execute one or more particular functions and a processor provided by one or more hardware logic circuits. The computer programs may be stored, as instructions being executed by a computer, in a tangible non-transitory computer-readable medium.

Here, the process of the flowchart or the flowchart described in this application includes a plurality of sections (or steps), and each section is expressed as, for example, S100. Further, each section may be divided into several subsections, while several sections may be combined into one section. Furthermore, each section thus configured may be referred to as a device, module, or means.

**Claims**

1. An information process device (10) configured to approximate model data including a plurality of values by approximate data including a combination of basis data and coefficient data, the information process device (10) comprising:

a selection unit (20) configured to select a basis data candidate that constitutes the approximate data;
an evaluation metric calculation unit (22) configured to calculate an approximate data candidate based on the basis data candidate and calculates an evaluation metric that evaluates the approximate data candidate;
a regression model generation unit (24) configured to generate a regression model representing a relationship between the evaluation metric and the basis data candidate constituting the approximate data candidate;
a repeat control unit (26) configured to execute, at least once, selection by the selection unit (20), calculation by the evaluation metric calculation unit (22), and generation by the regression model generation unit (24) based on a selected basis data candidate;
wherein the generation of the regression model at each iteration of the repeating process is based on the previous determined basis data candidates and their corresponding evaluation metrics, and
a coefficient data calculation unit (30) configured to calculate the coefficient data based on the basis data candidate constituting the approximate data candidate of the evaluation metric having a desirable value when a predetermined termination condition is satisfied,
wherein:

the selection unit (20) is configured to select the basis data candidate to cause the regression model to more accurately predict the evaluation metric,
the model data, the basis data, the coefficient data, and the approximate data are each represented by a matrix,
the approximate data is defined as V,
the basis data is defined as M,
the coefficient data is defined as C,
the approximate data is represented by a first equation of

$$V = MC \text{ ,}$$

the model data is defined as W,
the coefficient data is represented by a second equation of

$$C = (M^T M)^{-1} M^T W \text{ ,}$$

the evaluation metric is an error between the approximate data candidate formed by the basis data candidate and the model data,
the evaluation metric is defined as z,
a value of the basis data candidate is defined as $s_i$,
a value of the basis data candidate is defined as $s_j$,
a first weight parameter is defined as $a_{ij}$,
a second weight parameter is defined as $b_i$,
the regression model generation unit (24) is configured to generate the regression model shown by a third equation of

$$z = \sum_{i,j} a_{ij} s_i s_j + \sum_i b_i s_i \text{ ,}$$

a neural network includes a plurality of layers,
the model data is weight data showing a weight for each of the plurality of layers of the neural network model,
the selection unit (20) minimizes the error defined by z to calculate the approximate data with higher approximate degree,

the neural network is used for automatic driving of a vehicle,
data input to the neural network is an image data of an in-vehicle camera,
output data from the neural network is at least one of an operation amount of accelerator or brake or an operation amount of steering wheel and is used for the automatic driving of the vehicle.

2.  The information process device (10) according to claim 1, wherein:
the basis data consists of a plurality of binary values or a plurality of multi-valued values.

3.  The information process device (10) according to claim 1 or 2, wherein:
the regression model generation unit (24) is configured to calculate a plurality of weight parameters of the regression model as a plurality of probability distributions.

4.  The information process device (10) according to any one of claims 1 to 3, wherein:
the regression model is a cubic or a higher-order polynomial.

5.  A computer-implemented data decomposition method that approximates model data including a plurality of values by approximate data including a combination of basis data and coefficient data, the data decomposition method comprising:

selecting a basis data candidate that constitutes the approximate data;
calculating an approximate data candidate based on the basis data candidate and
calculating an evaluation metric that evaluates the approximate data candidate;
generating a regression model representing a relationship between the evaluation metric and the basis data candidate constituting the approximate data candidate;
repeating, at least once, selection of the basis data candidate, calculation of the approximate data candidate, calculation of the evaluation metric, and generation of the regression model based on the selected basis data candidate;
wherein generating the regression model at each iteration of the repeating process is based on the previous determined basis data candidates and their corresponding evaluation metrics, and
calculating the coefficient data based on the basis data candidate constituting the approximate data candidate of the evaluation metric having a desirable value when a predetermined termination condition is satisfied, wherein:

the basis data candidate is selected to cause the regression model to more accurately predict the evaluation metric,
the model data, the basis data, the coefficient data, and the approximate data are each represented by a matrix,
the approximate data is defined as V,
the basis data is defined as M,
the coefficient data is defined as C,
the approximate data is represented by a first equation of

$$V = MC \, ,$$

the model data is defined as W,
the coefficient data is represented by a second equation of

$$C = (M^T M)^{-1} M^T W \, ,$$

the evaluation metric is an error between the approximate data candidate formed by the basis data candidate and the model data,
the evaluation metric is defined as z,
a value of the basis data candidate is defined as $s_i$,
a value of the basis data candidate is defined as $s_j$,
a first weight parameter is defined as $a_{ij}$,
a second weight parameter is defined as $b_i$, and

the regression model is shown by a third equation of

$$z = \sum_{i,j} a_{ij} s_i s_j + \sum_i b_i s_i$$

,

a neural network includes a plurality of layers,
the model data is weight data showing a weight for each of the plurality of layers of the neural network model,
the basis data candidate is selected to minimize the error defined by z to calculate the approximate data with higher approximate degree,
the neural network is used for automatic driving of a vehicle,
data input to the neural network is an image data of an in-vehicle camera, and
output data from the neural network is at least one of an operation amount of accelerator or brake or an operation amount of steering wheel and is used for the automatic driving of the vehicle.

6. A data decomposition program comprising instructions which, when the program is executed by a computer causes the computer of an information process device (10) configured to approximate model data including a plurality of values by approximate data including a combination of basis data and coefficient data to function as:

a selection unit (20) configured to select a basis data candidate that constitutes the approximate data;
an evaluation metric calculation unit (22) configured to

calculate an approximate data candidate based on the basis data candidate and
calculate an evaluation metric that evaluates the approximate data candidate;

a regression model generation unit (24) configured to generate a regression model representing a relationship between the evaluation metric and the basis data candidate constituting the approximate data candidate;
a repeat control unit (26) configured to execute, at least once, selection by the selection unit (20), calculation by the evaluation metric calculation unit (22), and generation by the regression model generation unit (24) based on the selected basis data candidate;
wherein the generation of the regression model at each iteration of the repeating process is based on the previous determined basis data candidates and their corresponding evaluation metrics, and
a coefficient data calculation unit (30) configured to calculate the coefficient data based on the basis data candidate constituting the approximate data candidate of the evaluation metric having a desirable value when a predetermined termination condition is satisfied,
wherein:

the selection unit (20) is configured to select the basis data candidate to cause the regression model to more accurately predict the evaluation metric,
the model data, the basis data, the coefficient data, and the approximate data are each represented by a matrix,
the approximate data is defined as V,
the basis data is defined as M,
the coefficient data is defined as C,
the approximate data is represented by a first equation of

$$V = MC$$

,

the model data is defined as W,
the coefficient data is represented by a second equation of

$$C = (M^T M)^{-1} M^T W$$

,

the evaluation metric is an error between the approximate data candidate formed by the basis data candidate and the model data,
the evaluation metric is defined as z,
a value of the basis data candidate is defined as $s_i$,
a value of the basis data candidate is defined as $s_j$,
a first weight parameter is defined as $a_{ij}$,
a second weight parameter is defined as $b_i$, and
the regression model generation unit (24) is configured to generate the regression model shown by a third equation of

$$z = \sum_{i,j} a_{ij} s_i s_j + \sum_i b_i s_i$$
,

a neural network includes a plurality of layers,
the model data is weight data showing a weight for each of the plurality of layers of the neural network model,
the selection unit (20) minimizes the error defined by z to calculate the approximate data with higher approximate degree,
the neural network is used for automatic driving of a vehicle,
data input to the neural network is an image data of an in-vehicle camera,output data from the neural network is at least one of an operation amount of accelerator or brake or an operation amount of steering wheel and is used for the automatic driving of the vehicle.

7. The information process device (10) according to claim 1, wherein:
The selection unit (20) is configured to select the basis data candidate that improves the prediction accuracy of the evaluation metric based on the regression model.

8. The information process device (10) according to claim 1, wherein:
the evaluation metric having the desirable value is an evaluation metric having a predetermined value or less.


**Patentansprüche**

1. Informationsverarbeitungsvorrichtung (10), die konfiguriert ist, um Modelldaten, die mehrere Werte enthalten, durch Näherungsdaten, die eine Kombination aus Basisdaten und Koeffizientendaten enthalten, zu approximieren, wobei die Informationsverarbeitungsvorrichtung (10) aufweist:

eine Auswahleinheit (20), die konfiguriert ist, um einen Basisdatenanwärter zu wählen, der die Näherungsdaten bildet;
eine Bewertungsmetrikberechnungseinheit (22), die konfiguriert ist, um einen Näherungsdatenanwärter auf der Grundlage des Basisdatenanwärters zu berechnen und eine Bewertungsmetrik zu berechnen, die den Näherungsdatenanwärter bewertet;
eine Regressionsmodellerzeugungseinheit (24), die konfiguriert ist, um ein Regressionsmodell zu erzeugen, das eine Beziehung zwischen der Bewertungsmetrik und dem Basisdatenanwärter darstellt, der den Näherungsdatenanwärter bildet;
eine Wiederholungssteuereinheit (26), die konfiguriert ist, um mindestens einmal die Auswahl durch die Auswahleinheit (20), die Berechnung durch die Bewertungsmetrikberechnungseinheit (22) und die Erzeugung durch die Regressionsmodellerzeugungseinheit (24) auf der Grundlage eines gewählten Basisdatenanwärters auszuführen;
wobei die Erzeugung des Regressionsmodells bei jeder Iteration des Wiederholungsprozesses auf den zuvor bestimmten Basisdatenanwärtern und ihren entsprechenden Bewertungsmetriken basiert, und
eine Koeffizientendatenberechnungseinheit (30), die konfiguriert ist, um die Koeffizientendaten auf der Grundlage des Basisdatenanwärters zu berechnen, der den Näherungsdatenanwärter der Bewertungsmetrik mit einem gewünschten Wert bildet, wenn eine vorbestimmte Beendigungsbedingung erfüllt ist,
wobei
die Auswahleinheit (20) konfiguriert ist, um den Basisdatenanwärter zu wählen, um zu bewirken, dass das Regressionsmodell die Bewertungsmetrik genauer vorhersagt,

die Modelldaten, die Basisdaten, die Koeffizientendaten und die Näherungsdaten jeweils durch eine Matrix dargestellt werden,
die Näherungsdaten als V definiert sind,
die Basisdaten als M definiert sind,
die Koeffizientendaten als C definiert sind,
die Näherungsdaten durch eine erste Gleichung

$$V = MC$$

dargestellt sind,
die Modelldaten als W definiert sind,
die Koeffizientendaten durch eine zweite Gleichung

$$C = (M^T M)^{-1} M^T W$$

dargestellt sind,
die Bewertungsmetrik ein Fehler zwischen dem durch den Basisdatenanwärter gebildeten Näherungsdatenanwärter und den Modelldaten ist,
die Bewertungsmetrik als z definiert ist,
ein Wert des Basisdatenanwärters als $s_i$ definiert ist,
ein Wert des Basisdatenanwärters als $s_j$ definiert ist,
ein erster Gewichtungsparameter als $a_{ij}$ definiert ist,
ein zweiter Gewichtungsparameter als $b_i$ definiert ist,
die Regressionsmodellerzeugungseinheit (24) konfiguriert ist, um das Regressionsmodell zu erzeugen, das durch eine dritte Gleichung

$$z = \sum_{i,j} a_{ij} s_i s_j + \sum_i b_i s_i$$

dargestellt ist,
ein neuronales Netz mehrere Schichten umfasst,
die Modelldaten Gewichtsdaten sind, die ein Gewicht für jede der mehreren Schichten des neuronalen Netzmodells zeigen,
die Auswahleinheit (20) den durch z definierten Fehler minimiert, um die Näherungsdaten mit höherem Näherungsgrad zu berechnen,
das neuronale Netz für ein automatisches Fahren eines Fahrzeugs verwendet wird,
eine Dateneingabe in das neuronale Netz Bilddaten einer In-Vehicle-Kamera sind, und
Ausgangsdaten des neuronalen Netzes wenigstens entweder ein Betätigungsbetrag von Gaspedal oder Bremse oder ein Betätigungsbetrag des Lenkrads sind und für das automatische Fahren des Fahrzeugs verwendet werden.

2. Informationsverarbeitungsvorrichtung (10) nach Anspruch 1, wobei
die Basisdaten aus mehreren Binärwerten oder mehreren mehrwertigen Werten bestehen.

3. Informationsverarbeitungsvorrichtung (10) nach Anspruch 1 oder 2, wobei
die Regressionsmodellerzeugungseinheit (24) konfiguriert ist, um mehrere Gewichtsparameter des Regressionsmodells als mehrere Wahrscheinlichkeitsverteilungen zu berechnen.

4. Informationsverarbeitungsvorrichtung (10) nach einem der Ansprüche 1 bis 3, wobei
das Regressionsmodell ein kubisches Polynom oder ein Polynom höherer Ordnung ist.

5. Computer-implementiertes Datenzerlegungsverfahren, das Modelldaten, die mehrere Werte enthalten, durch Näherungsdaten approximiert, die eine Kombination aus Basisdaten und Koeffizientendaten enthalten, wobei das Datenzerlegungsverfahren umfasst:

Auswählen eines Basisdatenanwärters, der die Näherungsdaten bildet;

Berechnen eines Näherungsdatenanwärters auf der Grundlage des Basisdatenanwärters und

Berechnen einer Bewertungsmetrik, die den Näherungsdatenanwärter bewertet;

Erzeugen eines Regressionsmodells, das eine Beziehung zwischen der Bewertungsmetrik und dem Basisdatenanwärter darstellt, der den Näherungsdatenanwärter bildet;

Wiederholen, mindestens einmal, der Auswahl des Basisdatenanwärters, der Berechnung des Näherungsdatenanwärters, der Berechnung der Bewertungsmetrik und der Erzeugung des Regressionsmodells auf der Grundlage des gewählten Basisdatenanwärters;

wobei die Erzeugung des Regressionsmodells bei jeder Iteration des Wiederholungsprozesses auf den zuvor bestimmten Basisdatenanwärtern und ihren entsprechenden Bewertungsmetriken basiert, und

Berechnen der Koeffizientendaten auf der Grundlage des Basisdatenanwärters, der den Näherungsdatenanwärter der Bewertungsmetrik mit einem gewünschten Wert bildet, wenn eine vorbestimmte Beendigungsbedingung erfüllt ist,

wobei

der Basisdatenanwärter gewählt wird, um zu bewirken, dass das Regressionsmodell die Bewertungsmetrik genauer vorhersagt,

die Modelldaten, die Basisdaten, die Koeffizientendaten und die Näherungsdaten jeweils durch eine Matrix dargestellt werden,

die Näherungsdaten als V definiert sind,

die Basisdaten als M definiert sind,

die Koeffizientendaten als C definiert sind,

die Näherungsdaten durch eine erste Gleichung

$$V = MC$$

dargestellt werden,

die Modelldaten als W definiert sind,

die Koeffizientendaten durch eine zweite Gleichung

$$C = (M^T M)^{-1} M^T W$$

dargestellt werden,

die Bewertungsmetrik ein Fehler zwischen dem durch den Basisdatenanwärter gebildeten Näherungsdatenanwärter und den Modelldaten ist,

die Bewertungsmetrik als z definiert ist,

ein Wert des Basisdatenanwärters als $s_i$ definiert ist,

ein Wert des Basisdatenanwärters als $s_j$ definiert ist,

ein erster Gewichtungsparameter als $a_{ij}$ definiert ist,

ein zweiter Gewichtungsparameter als $b_i$ definiert ist, und

das Regressionsmodell durch eine dritte Gleichung

$$z = \sum_{i,j} a_{ij} s_i s_j + \sum_i b_i s_i$$

dargestellt wird,

ein neuronales Netz mehrere Schichten umfasst,

die Modelldaten Gewichtsdaten sind, die ein Gewicht für jede der mehreren Schichten des neuronalen Netzmodells zeigen,

der Basisdatenanwärter gewählt wird, um den durch z definierten Fehler zu minimieren, um die Näherungsdaten mit höherem Näherungsgrad zu berechnen,

das neuronale Netz für ein automatisches Fahren eines Fahrzeugs verwendet wird,

eine Dateneingabe in das neuronale Netz Bilddaten einer In-Vehicle-Kamera sind, und

Ausgangsdaten des neuronalen Netzes wenigstens entweder ein Betätigungsbetrag von Gaspedal oder Bremse oder ein Betätigungsbetrag des Lenkrads sind und für das automatische Fahren des Fahrzeugs verwendet werden.

6. Datenzerlegungsprogramm mit Befehlen, die, wenn das Programm von einem Computer ausgeführt wird, bewirken, dass der Computer einer Informationsverarbeitungsvorrichtung (10), die konfiguriert ist, um Modelldaten, die mehrere Werte enthalten, durch Näherungsdaten zu approximieren, die eine Kombination aus Basisdaten und Koeffizientendaten enthalten, fungiert als:

eine Auswahleinheit (20), die konfiguriert ist, um einen Basisdatenanwärter zu wählen, der die Näherungsdaten bildet;
eine Bewertungsmetrikberechnungseinheit (22), die konfiguriert ist, um

einen Näherungsdatenanwärter auf der Grundlage des Basisdatenanwärters zu berechnen, und
eine Bewertungsmetrik zu berechnen, die den Näherungsdatenanwärter bewertet;

eine Regressionsmodellerzeugungseinheit (24), die konfiguriert ist, um ein Regressionsmodell zu erzeugen, das eine Beziehung zwischen der Bewertungsmetrik und dem Basisdatenanwärter darstellt, der den Näherungsdatenanwärter bildet;
eine Wiederholungssteuereinheit (26), die konfiguriert ist, um mindestens einmal die Auswahl durch die Auswahleinheit (20), die Berechnung durch die Bewertungsmetrikberechnungseinheit (22) und die Erzeugung durch die Regressionsmodellerzeugungseinheit (24) auf der Grundlage des gewählten Basisdatenanwärters auszuführen;
wobei die Erzeugung des Regressionsmodells bei jeder Iteration des Wiederholungsprozesses auf den zuvor bestimmten Basisdatenanwärtern und ihren entsprechenden Bewertungsmetriken basiert, und
eine Koeffizientendatenberechnungseinheit (30), die konfiguriert ist, um die Koeffizientendaten auf der Grundlage des Basisdatenanwärters zu berechnen, der den Näherungsdatenanwärter der Bewertungsmetrik mit einem gewünschten Wert bildet, wenn eine vorbestimmte Beendigungsbedingung erfüllt ist,
wobei
die Auswahleinheit (20) konfiguriert ist, um den Basisdatenanwärter zu wählen, um zu bewirken, dass das Regressionsmodell die Bewertungsmetrik genauer vorhersagt,
die Modelldaten, die Basisdaten, die Koeffizientendaten und die Näherungsdaten jeweils durch eine Matrix dargestellt werden,
die Näherungsdaten als V definiert sind,
die Basisdaten als M definiert sind,
die Koeffizientendaten als C definiert sind,
die Näherungsdaten durch eine erste Gleichung

$$V = MC$$

dargestellt werden,
die Modelldaten als W definiert sind,
die Koeffizientendaten durch eine zweite Gleichung

$$C = (M^T M)^{-1} M^T W$$

dargestellt werden,
die Bewertungsmetrik ein Fehler zwischen dem durch den Basisdatenanwärter gebildeten Näherungsdatenanwärter und den Modelldaten ist,
die Bewertungsmetrik als z definiert ist,
ein Wert des Basisdatenanwärters als $s_i$ definiert ist,
ein Wert des Basisdatenanwärters als $s_j$ definiert ist,
ein erster Gewichtungsparameter als $a_{ij}$ definiert ist,
ein zweiter Gewichtungsparameter als $b_i$ definiert ist, und
die Regressionsmodellerzeugungseinheit (24) konfiguriert ist, um das Regressionsmodell zu erzeugen, das durch eine dritte Gleichung

$$z = \sum_{i,j} a_{ij} s_i s_j + \sum_i b_i s_i$$

dargestellt wird,

ein neuronales Netz mehrere Schichten umfasst,

die Modelldaten Gewichtsdaten sind, die ein Gewicht für jede der mehreren Schichten des neuronalen Netzmodells zeigen,

die Auswahleinheit (20) den durch z definierten Fehler minimiert, um die Näherungsdaten mit höherem Näherungsgrad zu berechnen,

das neuronale Netz für ein automatisches Fahren eines Fahrzeugs verwendet wird,

eine Dateneingabe in das neuronale Netz Bilddaten einer In-Vehicle-Kamera sind, und

Ausgangsdaten des neuronalen Netzes wenigstens entweder ein Betätigungsbetrag von Gaspedal oder Bremse oder ein Betätigungsbetrag des Lenkrads sind und für das automatische Fahren des Fahrzeugs verwendet werden.

**7.** Informationsverarbeitungsvorrichtung (10) nach Anspruch 1, wobei
die Auswahleinheit (20) konfiguriert ist, um den Basisdatenanwärter zu wählen, der die Vorhersagegenauigkeit der Bewertungsmetrik auf der Grundlage des Regressionsmodells verbessert.

**8.** Informationsverarbeitungsvorrichtung (10) nach Anspruch 1, wobei
die Bewertungsmetrik mit dem gewünschten Wert eine Bewertungsmetrik mit einem vorbestimmten oder geringeren Wert ist.

**Revendications**

**1.** Dispositif de traitement d'informations (10) configuré pour approximer des données de modèle incluant une pluralité de valeurs par des données d'approximation incluant une combinaison de données de base et de données de coefficient, le dispositif de traitement d'informations (10) comprenant :

une unité de sélection(20) configurée pour sélectionner un candidat de données de base qui constitue les données d'approximation ;

une unité de calcul de métrique d'évaluation (22) configurée pour calculer un candidat de données d'approximation sur la base du candidat de données de base et calcule une métrique d'évaluation qui évalue le candidat de données d'approximation ;

une unité de génération de modèle de régression (24) configurée pour générer un modèle de régression représentant une relation entre la métrique d'évaluation et le candidat de données de base constituant le candidat de données d'approximation ;

une unité de commande de répétition (26) configurée pour exécuter, au moins une fois, une sélection par l'unité de sélection (20), un calcul par l'unité de calcul de métrique d'évaluation (22) et une génération par l'unité de génération de modèle de régression (24) sur la base d'un candidat de données de base sélectionné ;

dans lequel la génération du modèle de régression à chaque itération du processus répétitif est basée sur les candidats de données de base précédemment déterminés et leurs métriques d'évaluation correspondantes, et

une unité de calcul de données de coefficient (30) configurée pour calculer les données de coefficient sur la base du candidat de données de base constituant le candidat de données d'approximation de la métrique d'évaluation présentant une valeur souhaitable lorsqu'une condition de terminaison prédéterminée est remplie, dans lequel :

l'unité de sélection (20) est configurée pour sélectionner le candidat de données de base pour amener le modèle de régression à prédire plus précisément la métrique d'évaluation,

les données de modèle, les données de base, les données de coefficient et les données d'approximation sont chacune représentées par une matrice,

les données d'approximation sont définies comme V,

les données de base sont définies comme M,

les données de coefficient sont définies comme C,

les données d'approximation sont représentées par une première équation de

$$V = MC,$$

les données de modèle sont définies comme W,
les données de coefficient sont représentées par une deuxième équation de

$$M^T)^{-1}M^TC,$$

la métrique d'évaluation est une erreur entre le candidat de données d'approximation formé par le candidat de données de base et les données de modèle,
la métrique d'évaluation est définie comme z,
une valeur du candidat de données de base est définie comme $s_i$,
une valeur du candidat de données de base est définie comme $s_j$,
un premier paramètre de poids est défini comme $a_{ij}$,
un second paramètre de poids est défini comme $b_i$,
l'unité de génération de modèle de régression (24) est configurée pour générer le modèle de régression représenté par une troisième équation de

$$\sum_{i,j} a_{ij}s_i s_j \sum_i b_i s_i z$$

un réseau neuronal inclut une pluralité de couches,
les données de modèle sont des données de poids montrant un poids pour chaque couche de la pluralité de couches du modèle de réseau neuronal,
l'unité de sélection (20) minimise l'erreur définie par z pour calculer les données d'approximation avec un degré approximatif plus élevé,
le réseau neuronal est utilisé pour la conduite automatique d'un véhicule,
les données entrées dans le réseau neuronal sont des données d'image d'une caméra embarquée,
les données de sortie du réseau neuronal sont au moins l'une d'une quantité de fonctionnement de l'accélérateur ou du frein ou d'une quantité de fonctionnement du volant et sont utilisées pour la conduite automatique du véhicule.

2. Dispositif de traitement d'informations (10) selon la revendication 1, dans lequel
les données de base consistent en une pluralité de valeurs binaires ou une pluralité de valeurs à valeurs multiples.

3. Dispositif de traitement d'informations (10) selon la revendication 1 ou 2, dans lequel
l'unité de génération de modèle de régression (24) est configurée pour calculer une pluralité de paramètres de poids du modèle de régression sous la forme d'une pluralité de distributions de probabilité.

4. Dispositif de traitement d'informations (10) selon l'une quelconque des revendications 1 à 3, dans lequel
le modèle de régression est un polynôme cubique ou d'ordre supérieur.

5. Procédé de décomposition de données mis en oeuvre par ordinateur qui approxime des données de modèle incluant une pluralité de valeurs par des données d'approximation incluant une combinaison de données de base et de données de coefficient, le procédé de décomposition de données comprenant :

la sélection d'un candidat de données de base qui constitue les données d'approximation ;
le calcul d'un candidat de données d'approximation sur la base du candidat de données de base et
le calcul d'une métrique d'évaluation qui évalue le candidat de données d'approximation ;
la génération d'un modèle de régression représentant une relation entre la métrique d'évaluation et le candidat de données de base constituant le candidat de données d'approximation ;
la répétition, au moins une fois, d'une sélection du candidat de données de base, du calcul du candidat de données d'approximation, du calcul de la métrique d'évaluation et de la génération du modèle de régression sur la base du candidat de données de base sélectionné ;
dans lequel la génération du modèle de régression à chaque itération du processus de répétition est basée sur les candidats de données de base précédemment déterminés et leurs métriques d'évaluation correspondantes, et

le calcul des données de coefficient sur la base du candidat de données de base constituant le candidat de données d'approximation de la métrique d'évaluation présentant une valeur souhaitable lorsqu'une condition de terminaison prédéterminée est remplie,

dans lequel :

le candidat de données de base est sélectionné pour amener le modèle de régression à prédire plus précisément la métrique d'évaluation,

les données de modèle, les données de base, les données de coefficient et les données d'approximation sont chacune représentées par une matrice,

les données d'approximation sont définies comme V,

les données de base sont définies comme M,

les données de coefficient sont définies comme C,

les données d'approximation sont représentées par une première équation de

$$V = MC,$$

les données du modèle sont définies comme W,

les données de coefficient sont représentées par une deuxième équation de

$$M^T)^{-1}M^T C,$$

la métrique d'évaluation est une erreur entre le candidat de données d'approximation formé par le candidat de données de base et les données de modèle,

la métrique d'évaluation est définie comme z,

une valeur du candidat de données de base est définie comme $s_i$,

une valeur du candidat de données de base est définie comme $s_j$,

un premier paramètre de poids est défini comme $a_{ij}$,

un second paramètre de poids est défini comme $b_i$, et

le modèle de régression est représenté par une troisième équation de

$$\sum_{i,j} a_{ij} s_i s_j \sum_i b_i s_i \, z$$

un réseau neuronal inclut une pluralité de couches,

les données de modèle sont des données de poids montrant un poids pour chaque couche de la pluralité de couches du modèle de réseau neuronal,

le candidat de données de base est sélectionné pour minimiser l'erreur définie par z pour calculer les données d'approximation avec un degré d'approximation plus élevé,

le réseau neuronal est utilisé pour la conduite automatique d'un véhicule,

les données entrées dans le réseau neuronal sont des données d'image d'une caméra embarquée, et

les données de sortie du réseau neuronal sont au moins l'une d'une quantité de fonctionnement de l'accélérateur ou du frein ou d'une quantité de fonctionnement du volant et sont utilisées pour la conduite automatique du véhicule.

6. Programme de décomposition de données comprenant des instructions qui, lorsque le programme est exécuté par un ordinateur, amènent l'ordinateur d'un dispositif de traitement d'informations (10) configuré pour approximer des données de modèle incluant une pluralité de valeurs par des données d'approximation incluant une combinaison de données de base et de données de coefficients pour fonctionner comme :

une unité de sélection (20) configurée pour sélectionner un candidat de données de base qui constitue les données d'approximation ;

une unité de calcul de métrique d'évaluation (22) configurée pour

calculer un candidat de données d'approximation sur la base du candidat de données de base et

calculer une métrique d'évaluation qui évalue le candidat de données d'approximation ;

une unité de génération de modèle de régression (24) configurée pour générer un modèle de régression représentant une relation entre la métrique d'évaluation et le candidat de données de base constituant le candidat de données d'approximation ;
une unité de commande de répétition (26) configurée pour exécuter, au moins une fois, une sélection par l'unité de sélection (20), un calcul par l'unité de calcul de métrique d'évaluation (22) et une génération par l'unité de génération de modèle de régression (24) sur la base du candidat de données de base sélectionné ;
dans lequel la génération du modèle de régression à chaque itération du processus répétitif est basée sur les candidats de données de base précédemment déterminés et leurs métriques d'évaluation correspondantes, et
une unité de calcul de données de coefficient (30) configurée pour calculer les données de coefficient sur la base du candidat de données de base constituant le candidat de données d'approximation de la métrique d'évaluation présentant une valeur souhaitable lorsqu'une condition de terminaison prédéterminée est remplie, dans lequel :

l'unité de sélection (20) est configurée pour sélectionner le candidat de données de base pour amener le modèle de régression à prédire plus précisément la métrique d'évaluation,
les données de modèle, les données de base, les données de coefficient et les données d'approximation sont chacune représentées par une matrice,
les données d'approximation sont définies comme V,
les données de base sont définies comme M,
les données de coefficient sont définies comme C,
les données d'approximation sont représentées par une première équation de

$$V = MC,$$

les données du modèle sont définies comme W,
les données de coefficient sont représentées par une deuxième équation de

$$M^T)^{-1} M^T C,$$

la métrique d'évaluation est une erreur entre le candidat de données d'approximation formé par le candidat de données de base et les données de modèle,
la métrique d'évaluation est définie comme z,
une valeur du candidat de données de base est définie comme $s_i$,
une valeur du candidat de données de base est définie comme $s_j$,
un premier paramètre de poids est défini comme $a_{ij}$,
un second paramètre de poids est défini comme $b_i$, et
l'unité de génération de modèle de régression (24) est configurée pour générer le modèle de régression représenté par une troisième équation de

$$\sum_{i,j} a_{ij} s_i s_j \sum_i b_i s_i z$$

un réseau neuronal inclut une pluralité de couches,
les données de modèle sont des données de poids montrant un poids pour chaque couche de la pluralité de couches du modèle de réseau neuronal,
l'unité de sélection (20) minimise l'erreur définie par z pour calculer les données d'approximation avec un degré approximatif plus élevé,
le réseau neuronal est utilisé pour la conduite automatique d'un véhicule,
les données entrées dans le réseau neuronal sont des données d'image d'une caméra embarquée, les données de sortie du réseau neuronal sont au moins l'une d'une quantité de fonctionnement de l'accélérateur ou du frein ou d'une quantité de fonctionnement du volant et sont utilisées pour la conduite automatique du véhicule.

**7.** Dispositif de traitement d'informations (10) selon la revendication 1, dans lequel :
l'unité de sélection (20) est configurée pour sélectionner le candidat de données de base qui améliore la précision de prédiction de la métrique d'évaluation sur la base du modèle de régression.

**8.** Dispositif de traitement d'informations (10) selon la revendication 1, dans lequel
la métrique d'évaluation présentant la valeur souhaitable est une métrique d'évaluation présentant une valeur prédéterminée ou moins.

# FIG. 1

INFORMATION PROCESS DEVICE 10

12 CALCULATOR

20 BASIS MATRIX CANDIDATE SELECTION UNIT

22 EVALUATION METRIC CALCULATION UNIT

24 REGRESSION MODEL GENERATION UNIT

26 REPEAT CONTROL UNIT

28 BASIS MATRIX IDENTIFICATION UNIT

30 COEFFICIENT MATRIX CALCULATION UNIT

14 ROM

16 RAM

18 LARGE CAPACITY STORAGE

# FIG. 2

$$W \atop (D \times N)$$ $\approx$ $$V = F(m, c) \atop (D \times N)$$ $\rightarrow$ $$M \atop (D \times K)$$ $$C \atop (K \times N)$$

# FIG. 3

|       | $m_1$ | $m_2$ | $m_3$ | $m_4$ | $m_5$ | $m_6$ |       |
|-------|-------|-------|-------|-------|-------|-------|-------|
| $Mc_1$ | 1     | 1     | 0     | 1     | 1     | 0     | $z_1$ |
| $Mc_2$ | 1     | 0     | 1     | 1     | 0     | 1     | $z_2$ |
| $Mc_3$ | 0     | 1     | 1     | 0     | 1     | 1     | $z_3$ |

MT      Z

# FIG. 4

# FIG. 5

```
                    ┌──────────┐
                    │  START   │
                    └────┬─────┘
                         │              S100
                ┌────────▼──────────┐
                │      SELECT       │
                │ BASIS MATRIX CANDIDATE │
                └────────┬──────────┘
                         │              S102
                ┌────────▼──────────┐
                │ CALCULATE APPROXIMATION │
                │   MATRIX CANDIDATE │
                └────────┬──────────┘
                         │              S104
                ┌────────▼──────────┐
                │    CALCULATE      │
                │ EVALUATION METRIC │
                └────────┬──────────┘
                         │              S106
                ┌────────▼──────────┐
                │    GENERATE       │
                │ REGRESSION MODEL  │
                └────────┬──────────┘
                         │              S108
              NO    ╱────▼────╲
         ◄─────────╱ TERMINATION  ╲
                   ╲ CONDITION SATISFIED? ╱
                    ╲────┬────╱
                         │ YES
       S110              │        S112
┌──────────────┐   ┌─────▼──────────┐
│    SELECT    │   │ IDENTIFY BASIS MATRIX │
│ BASIS MATRIX │   └─────┬──────────┘
│  CANDIDATE   │         │        S114
└──────────────┘   ┌─────▼──────────┐
                   │   CALCULATE    │
                   │ COEFFICIENT MATRIX │
                   └─────┬──────────┘
                         │
                    ┌────▼─────┐
                    │   END    │
                    └──────────┘
```

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018016608 A1

- DE 112017002766 T5

**Non-patent literature cited in the description**

- Randomized Nonnegative Matrix Factorization. **ERICHSON NB et al.** ARXIV.ORG. Cornell University Library, 06 November 2017, 1-24

- Randomized Nonnegative Matrix Factorization. **BENJAMIN ERICHSON N et al.** ARXIV.ORG. CORNELL UNIVERSITY LIBRARY, 06 November 2017, 1-24